# EUROPEAN PATENT APPLICATION

(11) **EP 2 234 173 A2**
(43) Date of publication of application: **29.09.2010**
(21) Application number: 09010839.0
(22) Date of filing: 25.08.2009
(51) Int. Cl.: H01L 31/042

(54) **Combined frame for a photovoltaic module**

(30) Priority: 26.03.2009 TW 98204738 U
(71) Applicant: Sintek Photronic Corporation, Sinshih Hsiang, Tainan Hsien (TW)
(72) Inventor: Hu, Sao-De, Hsinchu Fsien (TW); Hsiao, Yao-Chung, Longtan Hsiang, Taoyuan Hsien (TW)
(74) Representative: Schildberg, Peter

(57) **Abstract**

A combined frame for a photovoltaic module has four connecting beams (10) and four connectors (20). The connecting beams (10) are connected to each other and each has a body (11), a basal panel (14) and two miter faces (15). The body (11) has a mounting segment (12) and a connecting segment (13). The basal panel (14) is formed on and protrudes from the connecting segment (13). The miter faces (15) are formed obliquely on the basal panel (14). The connectors (20) are connected to the connecting beams (10) and each has a corner hub (21) and two inserting bars (24). The corner hub (21) has two inner adjacent surfaces (26). The inserting bars (24) are respectively formed on and protrude from the inner adjacent surfaces (26) of the corner hub (21) and are respectively mounted in the connecting segments (13) of two adjacent connecting beams (10).

## Description

### 1. Field of the Invention

The present invention relates to a combined frame, and more particularly relates to a combined frame for a photovoltaic module that can be used safely and assembled stably.

### 2. Description of Related Art

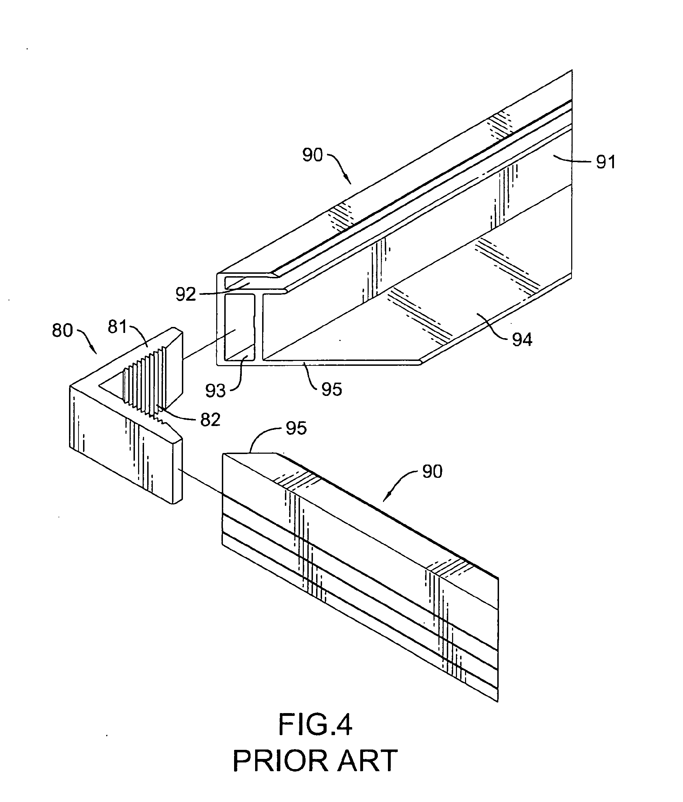

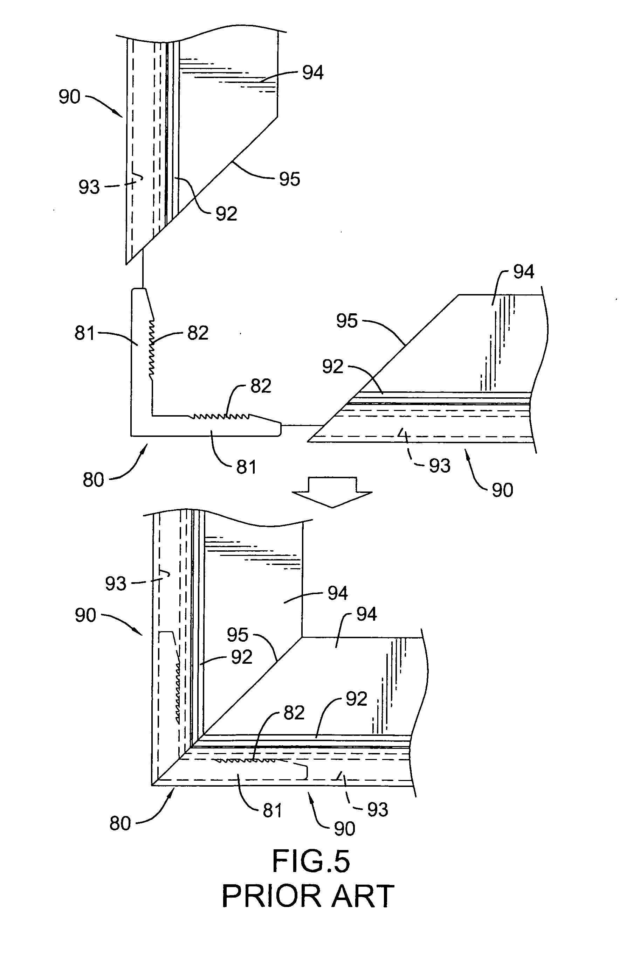

With reference to Figs. 4 and 5, a conventional combined frame can be mounted around and hold a photovoltaic module and has four connecting beams (90) and four connectors (80).

The connecting beams (90) are connected to each other to form a space for holding the photovoltaic module and each connecting beam (90) has a body (91), a basal panel (94) and two miter faces (95). The body (91) has two ends, a top, a bottom, a mounting segment (92) and a connecting segment (93). The mounting segment (92) is formed transversally on the top of the body (91) between the ends and has an opening mounted around a sidewall of the photovoltaic module. The connecting segment (93) is formed transversally through of the body (91) between the ends and has a channel and an inner side. The channel is formed through the connecting segment (93) and has an internal surface.

The basal panel (94) is formed on and protrudes from the inner side of the connecting segment (93) parallel with the opening of the mounting segment (92).

The miter faces (95) are respectively formed obliquely on the ends of the body (91) at the mounting segment (92), the connecting segment (93) and the basal panel (94) at an angle of 45°.

The connectors (80) are connected between the connecting beams (90) and each connector (80) is has two perpendicular inserting bars (81). The inserting bars (81) are formed perpendicularly to each other, are respectively mounted in the connecting segments (93) of two adjacent connecting beams (90) and each inserting bar (81) has a free end, an inner side and multiple teeth (82). The free end of the inserting bar (81) is inserted into the connecting segment (93) of the corresponding connecting beam (90). The inner side of the inserting bar (81) faces the internal surface of the connecting segment (93) of the corresponding connecting beam (90). The teeth (82) are formed on and protrude from the inner side of the inserting bar (81) and abut with the internal surface of the connecting segment (93) of the corresponding connecting beam (90). Then, the connecting beams (90) can be combined together by the connectors (80).

Although the conventional combined frame can be used to hold the photovoltaic module, the angle of each corner of the conventional combined frame is 90° and will form a sharp-pointed edge on the corner of the conventional combined frame. Thus, injuries may be caused by the sharp-pointed edge of the conventional combined frame. Furthermore, the miter faces (95) of each connecting beam (90) may have inaccuracies introduced during manufacture so negatively influencing stability of assembling the conventional combined frame. Consequently, the photovoltaic module may not be held firmly by the conventional combined frame.

Therefore, the present invention provides a combined frame to mitigate or obviate the aforementioned problems.

The main objective of the present invention is to provide a combined frame for a photovoltaic module that can be used safely and assembled stably.

The combined frame for a photovoltaic module in accordance with the present invention has four connecting beams and four connectors. The connecting beams are connected to each other and each connecting beam has a body, a basal panel and two miter faces. The body has a mounting segment and a connecting segment. The basal panel is formed on and protrudes from the connecting segment and has two free opposite ends. The miter faces are respectively formed obliquely on the free opposite ends of the basal panel. The connectors are connected to the connecting beams and each connector has a corner hub and two inserting bars. The corner hub has two inner adjacent surfaces, two outer adjacent surfaces and a mounting recess. The inserting bars are respectively formed on and protrude from the inner adjacent surfaces of the corner hub and are respectively mounted in the connecting segments of two adjacent connecting beams.

Other objectives, advantages and novel features of the invention will become more apparent from the following detailed description when taken in conjunction with the accompanying drawings.

### IN THE DRAWINGS:

Fig. 1 is a top view of a combined frame in accordance with the present invention, mounted with a photovoltaic module;
Fig. 2 is an enlarged partially exploded perspective view of the combined frame in Fig. 1;
Fig. 3 shows enlarged operational top views showing assembly of the combined frame in Fig. 1;
Fig. 4 is an enlarged exploded perspective view of a conventional combined frame in accordance with the prior art; and
Fig. 5 shows operational top views showing assembly of the combined frame in Fig. 4.

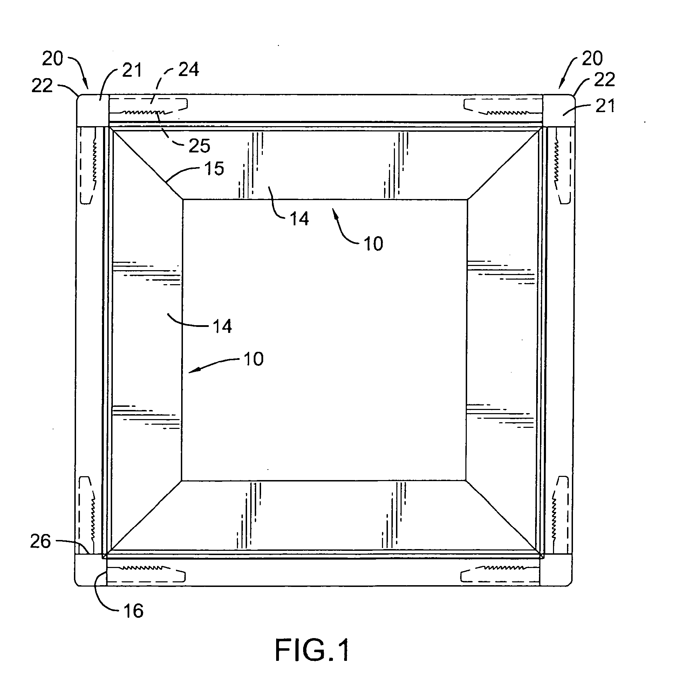

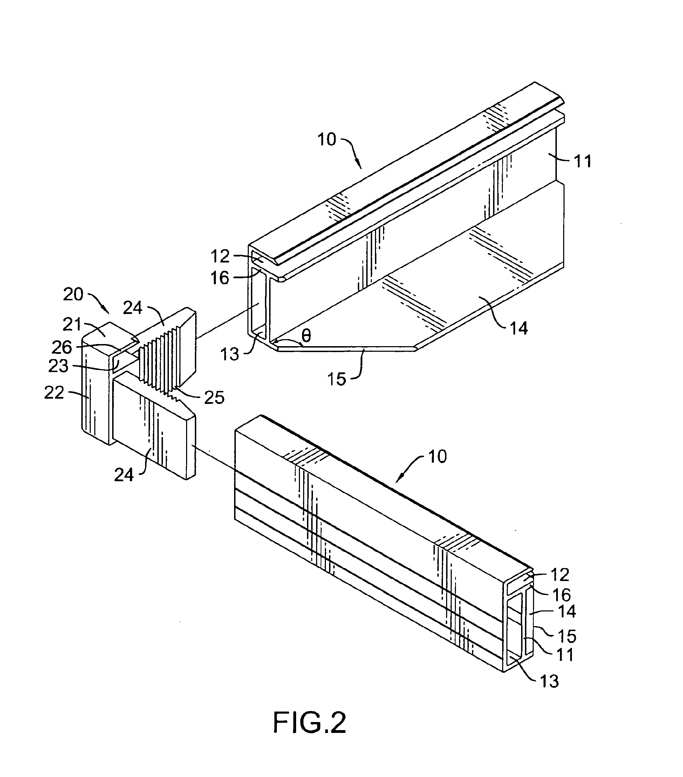

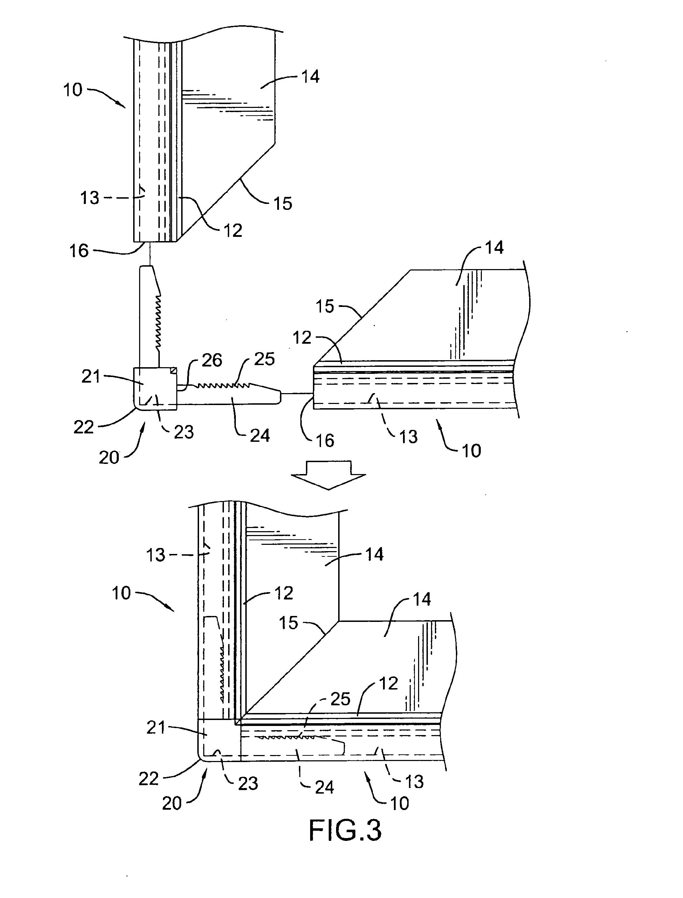

With reference to Figs. 1 to 3, a combined frame in accordance with the present invention for a photovoltaic module has four connecting beams (10) and four connectors (20).

The connecting beams (10) are connected to each other to form a space for holding the photovoltaic module and each connecting beam (10) has a body (11), a basal panel (14) and two miter faces (15).

The body (11) may be elongated and has two ends, a top, a bottom, a mounting segment (12) and a connecting segment (13). The mounting segment (12) is formed transversally on the top of the body (11) between the ends and has an opening mounted around a sidewall of the photovoltaic module. The connecting segment (13) is formed transversally on the bottom of the body (11) between the ends below the mounting segment (12) and has a channel, an inner side and two end edges (16). The channel is formed through the connecting segment (13) and has an internal surface. The end edges (16) are respectively formed on the ends of the body (11).

The basal panel (14) is formed on and protrudes from the inner side of the connecting segment (13) parallel with the opening of the mounting segment (12) and has two free opposite ends.

The miter faces (15) are respectively formed obliquely on the free opposite ends of the basal panel (14) at an angle of 135° at the free opposite end edges (16) of the connecting segment (13) and the basal panel (14).

The connectors (20) are connected to the connecting beams (10) and each connector (20) has a corner hub (21) and two inserting bars (24). The corner hub (21) has two inner adjacent surfaces (26), two outer adjacent surfaces (22), a top and a mounting recess (23). The inner adjacent surfaces (26) of the corner hub (21) respectively face the connecting segments (13) of two adjacent connecting beams (10) and abut with the end edges (16) of the corresponding connecting beams (10). The outer adjacent surfaces (22) of the corner hub (21) are curved. The mounting recess (23) is formed in the top of the corner hub (21), communicates with the mounting segments (12) of the adjacent connecting beams (10) and is mounted around one of the corners of the photovoltaic module.

The inserting bars (24) are respectively formed on and protrude perpendicularly from the inner adjacent surfaces (26) of the corner hub (21) between the inserting bars (24) and are respectively mounted in the connecting segments (13) of two adjacent connecting beams (10) to make the miter faces (15) of the adjacent connecting beams (10) contact each other. Each inserting bar (24) has a free end, an inner side and multiple teeth (25). The free end of the inserting bar (24) is inserted into the connecting segment (13) of the corresponding connecting beam (10). The inner side of the inserting bar (24) faces the internal surface of the connecting segment (13) of the corresponding connecting beam (10). The teeth (25) are formed on and protrude from the inner side of the inserting bar (24) and abut with the internal surface of the channel of the connecting segment (13) of the corresponding connecting beam (10). Accordingly, the connecting beams (10) can be combined securely together by the connectors (20).

When assembling the combined frame in accordance with the present invention with a photovoltaic module, a user only need insert the sidewalls of the photovoltaic module into the mounting segments of the connecting beams (10) and to insert the connectors (20) into the connecting beams (10) with the teeth (25) abutting against the internal surfaces of the channel of the connecting segments (13) of the connecting beams and holding the corners of the photovoltaic module in the mounting recesses (23) of the connectors (20). Consequently, the inner adjacent surfaces (26) of the connectors (20) can stably contact the end edges (16) of the connecting beams (10), and the photovoltaic module can be held firmly between the connecting beams (10) and the connectors (20) of the combined frame even if the miter faces (15) of the connecting beams (10) have inaccuracy introduced by manufacture. Furthermore, the outer adjacent outer surfaces (22) of each corner hub (21) are curved and can reduce risk of injury.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A combined frame for a photovoltaic module having
four connecting beams (10) connected to each other to form a space for holding the photovoltaic module and each connecting beam (10) having
a body (11) having
two ends;
a top;
a bottom;
a mounting segment (12) formed transversally on the top of the body (11) between the ends and having an opening mounted around a sidewall of the photovoltaic module; and
a connecting segment (13) formed transversally on the bottom of the body (11) between the ends below the mounting segment (12) and having
a channel formed through the connecting segment; and
an inner side; and
a basal panel (14) formed on and protruding from the inner side of the connecting segment (13) with the same direction as the opening of the mounting segment (12) and having two free opposite ends; and
two miter faces (15) respectively formed obliquely on the free opposite ends of the basal panel (14); and
four connectors (20) connected to the connecting beams (10) and each connector (10) having
a corner hub (21) having
two inner adjacent surfaces (26) respectively facing to the connecting segments (13) of two of the adjacent connecting beams (10);
two outer adjacent surfaces (22) being curved shaped;
a top; and
a mounting recess (23) formed in the top of the corner hub (21), communicating with the mounting segments (12) of the corresponding adjacent connecting beams (10) to mount around one of the corners of the photovoltaic module; and
two inserting bars (24) respectively formed on and protruding from the inner adjacent surfaces (26) of the corner hub (21), respectively mounted in the connecting segments (13) of the corresponding adjacent connecting beams (10) and each inserting bar (24) has a free end inserted into the connecting segment (13) of one of the corresponding connecting beams (10).

2. The combined frame as claimed in claim 1, wherein
the channel of the connecting segment (13) of the body (11) of each connecting beam (10) has an internal surface; and
the inserting bar (24) of each connector (20) has
an inner side; and
multiple teeth (25) formed on and protruding from the inner side of the inserting bar (24) and abutted with the internal surface of the channel of the connecting segment (13) of a corresponding connecting beam (10).

3. The combined frame as claimed in claim 2, wherein the inserting bars (24) of the connectors (20) are mounted in the connecting segments (13) of the connecting beams (10), and the miter faces (15) of adjacent connecting beams (10) contact each other.

4. The combined frame as claimed in claim 1 or 3, wherein the connecting segment (13) of the body (11) of each connecting beam (10) has two end edges (16) respectively formed on the ends of the body (10) and abutting with the inner adjacent surfaces (26) of two adjacent corner hubs (21).

5. The combined frame as claimed in claim 4, wherein the angle between the miter face (15) and the adjacent free opposite end edge (16) of the connecting segment (13) is 135°.
